(19) **Europäisches Patentamt**
**European Patent Office**
**Office européen des brevets**

(11) **EP 1 597 039 B1**

(12) **EUROPEAN PATENT SPECIFICATION**

(45) Date of publication and mention
of the grant of the patent:
**18.05.2011 Bulletin 2011/20**

(51) Int Cl.:
**B27N 1/00** (2006.01)     **B27N 3/00** (2006.01)

(21) Application number: **04706389.6**

(22) Date of filing: **29.01.2004**

(86) International application number:
**PCT/NL2004/000065**

(87) International publication number:
**WO 2004/067240 (12.08.2004 Gazette 2004/33)**

(54) **PROCESS FOR UPGRADING WOOD PARTS**

VERFAHREN ZUM VEREDELN VON HOLZTEILEN

PROCEDE DE TRAITEMENT DE PIECES EN BOIS

(84) Designated Contracting States:
**AT BE BG CH CY CZ DE DK EE ES FI FR GB GR HU IE IT LI LU MC NL PT RO SE SI SK TR**
Designated Extension States:
**LT LV**

(30) Priority: **31.01.2003 NL 1022548**

(43) Date of publication of application:
**23.11.2005 Bulletin 2005/47**

(73) Proprietor: **Plato International Technology B.V.**
**6827 AV Arnhem (NL)**

(72) Inventors:
• **BOONSTRA, Michiel, Jan**
**NL-4007 XG Tiel (NL)**
• **KEGEL, Edo, Vincent**
**NL-6871 TM Renkum (NL)**

• **RIJSDIJK, Jan, Frederik**
**NL-2281 HB Rijswijk (NL)**

(74) Representative: **Winckels, Johannes Hubertus F. et al**
**Vereenigde**
**Johan de Wittlaan 7**
**2517 JR Den Haag (NL)**

(56) References cited:
**EP-A- 0 161 766     EP-A- 0 373 726**
**WO-A-95/31680     WO-A-03/000475**
**WO-A-03/039825     CA-A- 1 211 913**

• **DATABASE WPI Section PQ, Week 198121 Derwent Publications Ltd., London, GB; Class Q76, AN 1981-E7985D XP002256683 & SU 761 797 A (SIBE TECHN INST) 7 September 1980 (1980-09-07)**

**Description**

The invention relates to a process for upgrading wood parts, wherein the wood parts in a hydrothermolysis step are brought under the influence of saturated steam at a temperature in the range of 130-220°C, such that a conversion of hemicellulose and lignin present in the wood parts takes place, wherein the wood parts are subsequently dried in a curing step to a moisture content of less than approximately 3 wt.% at a temperature in the range of 100-220°C.

Such a process is known from European patent EP 0 373 726. With the known process, wood of a relatively low quality, in particular wood of a relatively low durability, high moisture sensitivity and strong shrink and swell, such as soft wood, can be upgraded to durable, dimensionally stable and fungus-insensitive wood. The improvement of such properties takes place not only in an outer layer of the treated wood parts but throughout the piece. Moreover, the mechanical properties, in particular the stiffness and strength, of the upgraded wood obtained by the known process are relatively good with respect to untreated wood. Due to the properties mentioned, the upgraded wood parts are suitable for constructional and/or non-constructional applications, both indoors and outdoors, so that these upgraded wood species have utility in a relatively wide range of applications. It is noted that the conversion of the hemicellulose comprises a hydrolysis reaction.

The known process for upgrading wood parts is environmentally friendly because in that process, no, or relatively few, environmentally burdensome chemicals such as impregnating agents, fungicides and the like need to be used and introduced into the wood to impart particular desired properties to the wood. Therefore, the production and distribution of these wood parts is very friendly to the environment.

The process known from EP 0 373 726 is advantageous in particular over processes likewise known from the prior art, in which the wood is merely heated to over 180°C to improve durability and stability. The disadvantage of the latter processes is that the wood thereby becomes brittle and is cracked, to such an extent that it is often not usable anymore.

The disadvantage of the known process is that the wood to be treated often cracks during execution of that process. The anisotropy of the wood here plays a role that should not be underestimated. Shrinkage and swelling coefficients are very different especially in radial and tangential direction. Such cracking takes place both internally and externally. As a result, the strength of the wood parts is affected. Further, the cracking leads to upgraded wood parts with an unattractive exterior. Furthermore, in some cases, the wood parts obtained with the known process prove not to have the desired mechanical properties. For instance, in practice, it may be that use of the process proves to lead to relatively brittle wood parts which can easily break under mechanical loading.

The invention contemplates a process with which the disadvantages of the known process are eliminated while maintaining the advantages thereof. In particular, the invention contemplates a process according to the opening paragraph hereof, in which the durability and dimensional stability of wood parts is improved while preserving the mechanical properties.

To this end, the process according to the invention is characterized in that at least one dimension of each of the wood parts, at least before the hydrothermolysis step, is greater than about 10 cm, wherein the wood parts at the start of the hydrothermolysis step have an initial moisture content which is in the range of 10-25 wt.%.

Surprisingly, it has been found that with the wood upgrading process, very good results are obtained by carrying out the hydrothermolysis step on wood parts having an initial moisture content in the specified range of 10-25% by weight (90-75% by weight of dry wood). The fact is that these wood parts prove to contain relatively few cracks. The value of this initial moisture content with which the best results are obtained appears normally to depend on the kind of wood to be treated. Preferably, the initial moisture content of the wood parts is less than about 20 wt.%. Relatively good results are obtained in most wood species with an initial moisture content in the range of about 12-18 wt.%, in particular in the range of about 12-16 wt.%.

The moisture in the wood is preferably distributed very homogeneously. To that end, variations in the initial moisture content, measured over a wood part and/or between various wood parts, are preferably within ±2%.

The pre-drying to the required moisture content can for instance be done in wood dryers and/or in the open air.

Eligible for the process is, for instance, the wood of fast-growing tree species. Such wood is generally of very limited durability, it is moisture-sensitive and shrinks and swells strongly, is mostly rather soft and not very strong. Also eligible for the process, however, is the very low-durability sapwood (the portion of the trunk wood of the tree that is active in the growing and living process) of other tree species that are still too moisture-sensitive and too little durable for outdoor applications.

The process is applicable, for instance, to sawn wood, round wood, veneer and further to different forms of waste wood, wood shavings and wood chips, from which, in turn, sheet material can be manufactured.

**Hydrothermolysis step**

The hydrothermolysis step is preferably carried out accurately, since it appears that the moisture content of the wood to be upgraded is important in connection with the occurrence of cracking in the wood during this treatment, both internally and externally. It appears that, depending on the wood species to be treated, the initial moisture content is between 10 and 25 wt.%, preferably between 12 and 18 wt.%, more particularly between 12 and 16 wt.%. Preferably, the moisture content in the wood after the hydrothermolysis treatment has remained virtually the same. The above-mentioned conversion of hemicellulose and lignin contained in the wood parts takes place in saturated steam, whilst the highest temperature may be between 130 and 220 °C, depending on the intended intensity of the thermolysis. In this hydrothermolysis treatment, hemicellulose and lignin present in the cell and fiber walls and possibly present content substances in wall and/or lumina are at least partly broken down to chemically reactive components. What is avoided through the use of saturated steam is that the wood undergoes a drying during the thermolysis step. The conversion referred to comprises in particular a selective conversion of hemicellulose and lignin.

Without wishing to be bound to any theory, a possible explanation of the surprising effect mentioned is that the cracking is caused by shrinkage and swelling of the wood during the hydrothermolysis step. Such shrinkage and swelling is brought about by the moisture contained in the wood during the hydrothermolysis step, required for the conversion. When the wood is heated up during the hydrothermolysis step, the fiber saturation point of the fiber walls of the wood falls, which, in the case of a relatively high wood moisture content, leads to shrinkage of those fiber walls. Conversely, the fiber saturation point will rise with a decreasing temperature during the hydrothermolysis step, which can lead to swelling of the fiber walls.

The heating up and cooling down of the wood during the thermolysis step preferably takes place very gradually, the difference in temperature in the interior of the wood and at the surface being at most 10 degrees Centigrade. The gradual control of the temperature curve is for instance effected simply by way of the steam pressure, associated with the saturated vapor pressure and steam temperature. In this way, moisture content changes in the wood and attendant shrink and swell are properly controllable.

As, according to the invention, the initial moisture content is in the range of 10-25 wt.%, preferably in the range of 12-18 wt.%, more in particular in the range of 12-16 wt.%, the thermolysis step of the wood parts takes place with relatively little wood shrink and swell, so that this entails no or relatively little cracking, both at cellular level and at wood part level.

Preferably, an initial moisture content is chosen such that a relatively large part of that moisture is in a condition trimolecularly bound to the wood. In that case, the moisture content is usually about 15-16 wt.%. When the moisture is trimolecularly bound to the wood, only a minor part of the moisture can diffuse from the wood fiber walls to the cell lumen, thereby rendering shrinkage in the cell wall minimal.

The use of wood parts having an initial moisture content of about 15-16% has as a further advantage that the moisture content of that wood can remain relatively constant during the hydrothermolysis step. This is the result of the fact that during the execution of the hydrothermolysis step the wood fiber saturation point reaches a value which is typically near or in this moisture content range of 15-16%.

According to an advantageous elaboration of the invention, the hydrothermolysis step is carried out substantially adiabatically, such that the moisture content of the wood parts after the hydrothermolysis step is equal to that prior to that step.

Evidently, the hydrothermolysis step can also be carried out on wood parts in which the moisture content is less uniformly distributed. However, this involves the drawback that the chance of cracking during the execution of the hydrothermolysis step is increased, and that the conversion takes place less uniformly.

**Intermediate drying**

Preferably, between the hydrothermolysis step and the curing step, wood parts are dried in an intermediate drying step, such that the wood parts obtain a moisture content in the range of 2-10 wt.%.

This intermediate step is advantageous to bring the moisture content of the thermolyzed wood down so far that during the curing step only a minor amount of moisture needs to be evaporated, so that during that curing step the wood hardly shrinks anymore. In the intermediate drying step, the wood is preferably dried to a moisture content of 5-8 wet.%, more in particular to a moisture content of about 7 wet.%. The intermediate drying is done, for instance, in wood dryers, generally known in the wood processing industry. After the thermolysis step, the wood is still relatively soft, so that cracks may form readily. For the drying program, for instance known, typically mild schemes are followed.

**Curing**

In the curing step, the wood parts are subsequently, at least after the thermolysis step, dried to a moisture content of less than about 3 wt.% at a temperature in the range of 100-220 °C. During this step, the wood is preferably introduced into a low-oxygen environment. In it, the temperature is for instance raised gradually to a level of about 150 to 200 °C, depending on the intended result with regard to wood species and application. During this treatment, the wood loses substantially the last residues of moisture, exhibiting a minor extent of post-shrinkage. If the wood moisture content at the start of this step is too high, then, here too, again, there is a substantial chance of cracking and deformations in the wood. With the above-mentioned intermediate drying step, such cracking can be prevented. During the curing step, fixation takes place of the chemically reactive components in the cell walls as formed in the thermolysis step. Through the fixation of the chemically reactive components, uptake of moisture is strongly inhibited and so shrinkage and swelling, and hence associated warp of the wood, are strongly reduced. As a result of the curing, the fiber saturation point comes to lie at a relatively low moisture content, so that the wood is already rendered less sensitive to attack by wood destroying fungi. Moreover, a few of the chemically formed components are slightly toxic to wood destroying fungi and the easily degradable hemicellulose is for a large part, or even entirely, gone from the wood tissue. This combination of factors results in an increased durability of the wood.

Heating up and cooling down of the wood during the curing step preferably takes place gradually, such that the difference in temperature in the interior of the wood and at the surface is at most 15 degrees Centigrade. The moisture still present in the wood will evaporate with increasing wood temperature. Causing the moisture to evaporate too fast leads to an unduly fast shrinkage of the cell wall, which may also contribute to the undesired cracking of the wood.

Surprisingly, the wood has been found to possess good mechanical properties at the end of the curing treatment when the wood parts have a moisture content in the range of 2-10 wt.%, preferably 5 to 8%, at the start of that curing step. In the first place, this wood has been found to exhibit no cracking or relatively little cracking during the curing step under the influence of shrinkage. In addition, these wood parts are relatively strong upon completion of the curing step.

**Conditioning**

According to the invention, it is further very advantageous when the wood parts after the curing step undergo a conditioning step for the purpose of conditioning the wood.

After curing, the treated wood has a very low moisture content, at which it is normally not properly processable and workable. By conditioning the wood, the wood parts can, under controlled conditions, obtain a desired final moisture content, for instance a moisture content at which the wood parts are suitable to be directly applied, processed and worked without loss of wood quality. Conditioning can be carried out, for instance, in a wood dryer in which the climate is humidified by injecting low pressure steam.

Through the conditioning step, the wood is preferably adjusted to a moisture content in the range of about 2-8 wt.%. In particular, the wood is adjusted to a moisture content which is in agreement with a relative air humidity (RH) of the climate in which it will be used, for instance a 50 to 65% RH for an indoor climate or 75% RH for use in the outdoor climate. It is noted here that the wood moisture contents of the upgraded wood during use are much lower than those of the untreated wood at the same RH values, so that the upgraded wood does not suffer, or suffers relatively little, from fungoid growth and/or wood rot, compared with untreated wood.

In carrying out the various steps of the process, typically, different chemical compounds are released in the wood, for instance acetic acid, which, when they enter the air, may be irritant. For this reason, the treatments preferably take place in fully closed plants, allowing substantially all of the moisture released from the wood, with the released chemical compounds, to be removed as condensate. The hydrothermolysis step can be carried out, for instance, in an autoclave. For the drying step(s), one or more closable wood dryers can be used, which are preferably provided with a cooling system with which the moisture originating from the wood is condensed and removed. For curing, for instance a closable oven may be provided, which comprises a condensate discharge and an air conditioning installation.

The invention will presently be clarified in and by an example.

Example

Fresh wood parts, for instance pieces of wood of a relatively high moisture content recently sawn off a tree, were treated in a dryer and adjusted to an initial moisture content in the range of about 12-16 wt.% (88-84 wt.% of dry wood). Next, in a hydrothermolysis step, the wood parts were exposed to steam at a temperature in the range of 130-220 °C, such as to result in a conversion of hemicellulose and lignin contained in the wood parts to chemically reactive components. After this, the wood parts were treated in an intermediate drying step, so that the wood obtained a moisture content of about 7 wt.%. These wood parts were further dried and cured in a curing step, whereby fixation took place of the chemically reactive components formed in the thermolysis, at a temperature in the range of 100-200 °C. The moisture content of the wood parts thereby decreased to a moisture content of about 0.5 wt.%. After the curing step followed a conditioning step in which the wood was adjusted to a moisture content in the range of about 4-6 wt.%.

Results

As mentioned, the process according to the invention has advantageous effects on the mechanical properties of the wood. Hereinbelow, the most important effects are summarized.

Lignin determines to a considerable extent the compression strength of wood. This compression strength normally increases slightly as a result of the present process (which is probably caused by cross-linking of the lignin network). The modulus of elasticity normally increases too. The Janka hardness does not change or may increase to a slight extent.

Table I shows the results of the process according to the invention for a number of different wood species, the wood, for the purpose of upgrading, having each time undergone the following five steps in succession: the drying step, hydrothermolysis step, intermediate drying step, curing step and conditioning step. In the Table, the density, the bending strength (MOR modulus of rupture) and the modulus of elasticity (MOE) of untreated wood parts were compared with those of upgraded wood parts. The Table shows that most types of wood after upgrading exhibit a slightly lesser modulus of rupture and a slightly higher modulus of elasticity compared with untreated wood. In general, it may be stated that the mechanical properties of the wood prove to be well preserved, or even improved, under the influence of the present upgrading process.

Table 1. Mechanical properties of various wood species. *) Lit.: Hout vademecum 1996 [Wood Handbook 1996]. (Kluwer Technical books BV).

| | Vol. Mass (kg/m$^3$) | | MOR (N/mm$^2$) | | MOE (N/mm$^2$) | |
|---|---|---|---|---|---|---|
| | Upgraded | Ref * | Upgraded | Ref * | Upgraded | Ref * |
| Douglas | 549 | 580 | 77 | 81 | 11807 | 11600 |
| Pine | 512 | 500 | 74 | 79 | 12840 | 10800 |
| Radiata pine | 477 | 460 | 60 | 70 | 9605 | 9000 |
| Deal | 422 | 460 | 67 | 77 | 10780 | 10800 |
| Birch | 591 | 673 | 74 | 125 | 15568 | 14200 |
| Alder | 493 | 513 | 63 | 76 | 12386 | 9400 |
| Poplar | 393 | 457 | 56 | 70 | 10172 | 9700 |

Table 2 shows further test results for European pine that has been upgraded by the present process, at least by the above-mentioned five steps, compared with untreated European pine. In determining the mechanical properties of this wood species, use was made of test specimens substantially without defects.

Table 2. Mechanical properties of upgraded European pine (*Pinus syluestris*).

| | | Upgraded pine | Untreated pine (same batch) |
|---|---|---|---|
| Volumic mass (DIN 52182) | Kg/m$^3$ | | |
| Bending strength (DIN 52186)<br>- Standard deviation<br>- Moisture content | N/mm$^2$ | 85.9<br>20.8<br>4.1 | 88.7<br>10.4<br>14.8 |
| Modulus of elasticity bending strength | N/mm$^2$ | 10660 | 9660 |
| Modulus of elasticity compression strength<br>- Parallel<br>- Radial<br>- Tangential | N/mm$^2$ | <br>1371<br>169<br>203 | <br>1505<br>569<br>274 |
| Modulus of elasticity tensile strength (parallel) | N/mm$^2$ | 10536 | 10900 |
| Compression strength parallel to the fiber direction (DIN 52185)<br>- Standard deviation<br>- Moisture content | N<br><br>%<br>% | 65.7<br><br>11.3<br>4.6 | 51,3<br><br>6.4<br>13.5 |
| Compression strength radial<br>- Standard deviation | N<br>% | 2.4<br>30.4 | 4.2<br>7.0 |

(continued)

| | | Upgraded pine | Untreated pine (same batch) |
|---|---|---|---|
| Volumic mass (DIN 52182) | Kg/m$^3$ | | |
| - Moisture content | % | 4.8 | 12.6 |
| Compression strength tangential | N | 4.1 | 3.8 |
| - Standard deviation | % | 13.6 | 8.4 |
| - Moisture content | % | 4.0 | 13.4 |
| Tensile strength parallel to the fiber direction (DIN 52188) | N/mm$^2$ | 58.6 | 95.5 |
| - Standard deviation | % | 37.6 | 22.5 |
| - Moisture content | % | 4.2 | 13.2 |
| Brinell hardness | N/mm$^2$ | | |
| - Axial plane | | 59 | 37 |
| - Cross grain | | 20 | 19 |

The Tables further show that the process used affects the tensile strength of the wood. This tensile strength has decreased as a result of the upgrading, in particular through hydrolysis of cellulose fibrils. Cellulose determines the tensile strength of wood to a considerable extent.

In addition to the properties mentioned, the volumic mass normally proves to decrease as a result of the upgrading process, which is presumably caused by the evaporation of organic components. In addition, it is often observed that rupture of the wood upgraded in the manner described, at least during a destructive bending strength test, is accompanied by a short and sometimes even brittle break. Here, deciduous wood, in particular close to the heart, is found to be more sensitive to a brittle break than coniferous wood. This is presumably caused by the fact that the fiber length of deciduous wood is considerably shorter than that of coniferous wood.

Further measuring results, concerning hysteresis, swell and shrink of wood upgraded by the present invention compared with untreated wood are represented in the accompanying Figures, wherein:

Fig. 1 shows measuring results concerning European douglas;
Fig. 2 shows measuring results concerning radiata pine; and
Fig. 3 shows measuring results concerning abachi.

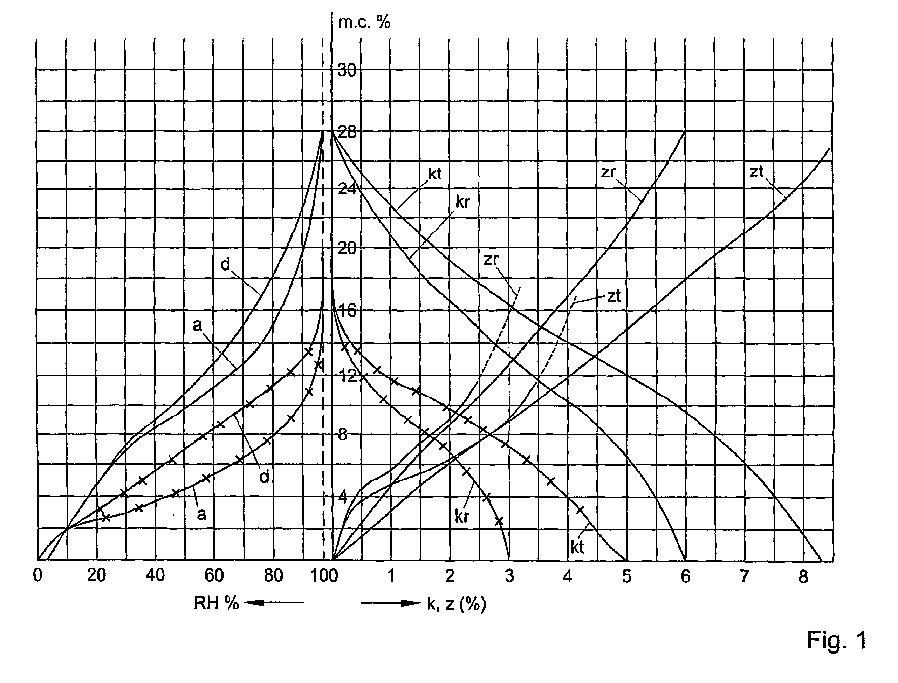

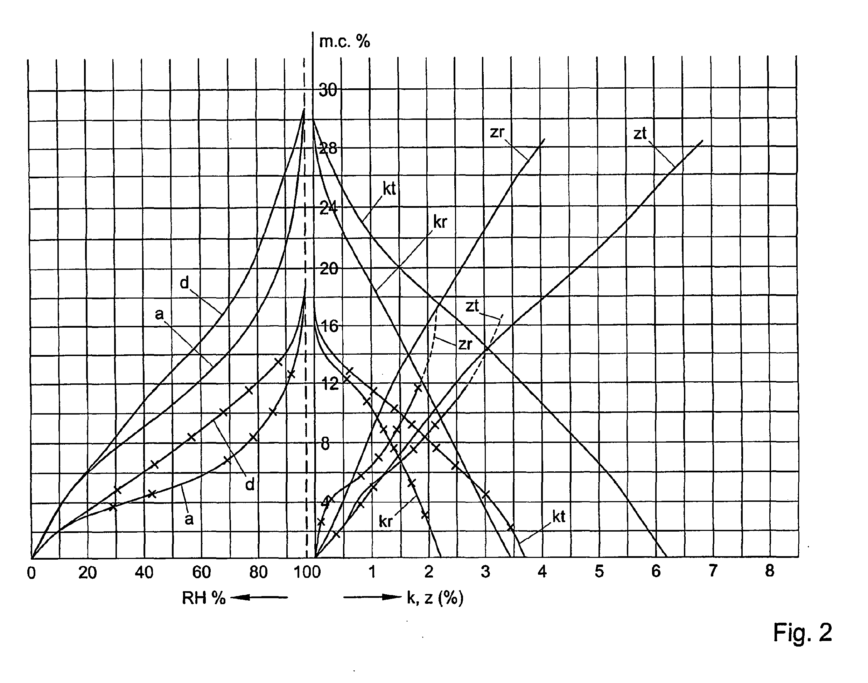

In each of the Figs. 1-3, the wood moisture content m.c. (%) is plotted along the vertical axis. On the horizontal axis, to the left of the m.c. axis, the relative air humidity RH (%) is plotted, while to the right of the m.c. axis the shrink k and swell z (%) are plotted. Results concerning the untreated wood are each time drawn with unmarked lines, while the data of the upgraded wood are represented by 'x'-marked lines. The respective measurements were performed according to methods described in the book by Rijsdijk J.F. and Laming P.B., entitled "Physical and related properties of 145 timbers", 1994, Kluwer Academic Publishers.

To the left of the m.c. axis in Figs. 1-3, the hysteresis of untreated wood and the wood upgraded through the above-mentioned five upgrading steps is represented. This hysteresis comprises a moisture behavior of wood, whereby moisture desorption and adsorption follow different lines d and a, respectively, in the relation between the wood moisture content m.c (%) and relative air humidity RH (%). In these left-hand parts of the graphs, the first that is to be noted is the less steep curve of the hysteresis of the upgraded wood compared with the untreated wood. In addition, larger differences between the location of the respective desorption and adsorption lines d, a are visible. This is indicative of a high stability, which both the coniferous and the deciduous wood has obtained through the treatment.

As follows, for instance, from Fig. 1; untreated European douglas at an RH of 80% (and a temperature of 20 °C) upon adsorption will reach a moisture content of approximately 15%. If this wood enters a drier climate, the wood will exhibit a tendency to shrink at approximately 70% RH: the intersection of the moisture content of 15% and the desorption line d. Upon further decrease of the RH, the wood shrinks. The same situation for the upgraded European douglas gives the following data: at 80% RH the wood upon adsorption reaches a moisture content of 8%. Placed in a dry climate, the wood will not exhibit a tendency to shrink until at an RH of 55% (intersection of the line for 8% moisture content and the desorption line d), that is, a decrease of 25% RH for the treated wood, as opposed to 10% RH for the untreated wood, which means a great increase in the stability of the douglas as a result of the treatment. Conversely, the following applies: starting from a point on the desorption line d, the RH in the case of the treated wood increases much more before the wood starts to swell than in the case of the untreated wood. Such results are also visible in Figs.

2 and 3 for radiata pine and abachi, respectively.

From Figs. 1-3, further, it can be derived directly what the moisture content m.c. is at a given value of the relative air humidity RH. It appears that the wood moisture content m.c. remains below 20% for the upgraded wood. Accordingly, wood rot and fungi get substantially no opportunity to attack this wood.

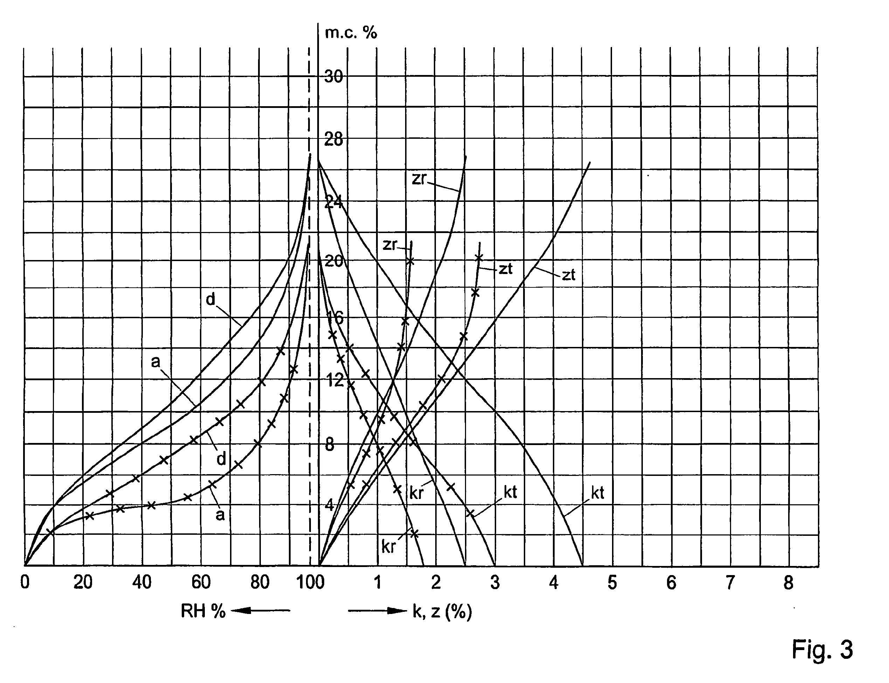

In addition, each of the Figs. 1-3 represents in the right-hand half the arising shrink k (%) and swell z (%) for the case where the wood comes from a different climate or from the wet or completely dry condition. In particular, in each case, the wood moisture content m.c. is drawn as a function of the tangential swell zt, radial swell zr, tangential shrink kt and radial shrink kr of the wood. An explanation of the last-mentioned terms zt, zr, kt, kr is given in the section 'terms and definitions' hereinbelow. It follows from the graphs 1-3 that the shrink kt, kr and swell zt, zr have been reduced considerably in the upgraded wood, specifically in the two coniferous wood species of douglas and radiata pine. Also, the decrease of the fiber saturation point is large with these wood species: from 28 - 30% to 17 - 18%. As Fig. 3 shows, the differences in the case of the tropical deciduous wood species abachi are less large because untreated abachi already has minor shrink and a low fiber saturation point.

In the following, further test results are given concerning the durability and the hazard class of the wood upgraded according to the present invention.

The natural durability of a number of wood species upgraded in the above-described manner was established with various standardized test methods, *inter alia* the EN 113 (test method for the determination of the protective effectiveness against wood-destroying basidiomycetes) and the ENV 807 (determination of the toxic effectiveness against soft rotting micro-fungi and other soil inhabiting micro-organisms). These show that the coniferous wood species upgraded according to the present invention that consist entirely or for a large part of sapwood (e.g. various types of pine), are suitable for applications in hazard class 3 (above-ground and not under roof according to EN 335-1) with an expected life of at least 15 years (in a temperate climate). Upgraded coniferous wood species that consist entirely, or for the greater part, of heartwood (e.g. larch, douglas, deal), are suitable for applications in hazard class 4 (in contact with soil and/or sweet water according to EN 355-1) with an expected life of at least 15 years (in a temperate climate). Upgraded deciduous wood (inter alia aspen, birch, alder and poplar) appears to be suitable for application in hazard class 3.

As has been mentioned, the wood upgraded according to the present invention is relatively durable. Thus, for instance, upgrading the wood has been found to have a clearly positive effect on the prevention of attack by the house longhorn beetle. The use of upgraded douglas and deal was found, after 4 weeks, to lead to a greater death among the larvae of the house longhorn beetle than in the case of untreated wood. After 12 weeks, all larvae were found to have died in the upgraded deal, while after that period still 37% and 96%, respectively, of the larvae proved to be alive in the untreated douglas and deal, respectively.

Terms and definitions

In the following, the relation between the wood moisture content and shrinkage is further elucidated. The moisture content (m.c.) of the wood is the weight of the moisture which a piece of wood contains relative to the dry weight of that piece of wood, expressed in percents. In formulaic form:

$$mc = (\rho_g - \rho_0)/\rho_0 \times 100\%$$

wherein $\rho_g$ is the weight of a piece of wood in moist/wet condition, and $\rho_o$ is the weight of that same piece of wood in completely dry condition (dried at a temperature of 103-105 °C to constant weight though not longer than 48 hours for conventional test samples.).

Wood is hygroscopic, that is to say, the moisture content is in a direct relation to the humidity of the air surrounding the wood, and this air humidity is generally designated as the relative humidity and indicated in a percentage, for instance a relative humidity (RH) of 65% or 90%. 0% is absolutely dry air and 100% is the maximum amount of moisture that the air can contain at the given temperature and pressure.

At an RH approximating 100%, wood as a hygroscopic material also reaches a maximum, viz. the fiber saturation point which, depending on the wood species, is between 30 and 20%. In this situation, the cell walls are saturated but in the cell cavities, the lumina, there is virtually no moisture yet. This moisture is called bound water/moisture. If the wood moisture content is higher than this value, the surplus of moisture is stored in the lumina and that moisture is designated as free water. Thus, freshly cut wood can have a high moisture content, for instance 180-210% for poplars, 110-160% for sapwood of many wood species, or 60-90% for heartwood.

Further, between the wood moisture content below the fiber saturation point and the shrink and swell, respectively, of wood, there is a fixed relation that depends on the wood species. Starting from the fiber saturation point, the wood shrinks more according as the moisture content is lower. Of many wood species, the relation between moisture content and shrink/swell is known.

In the structure of a tree trunk, and hence in every piece of wood sawn from the trunk, three directions can be identified, viz.: the axial direction, equal to the axial direction of the trunk; the radial direction, running from the heart of the trunk in radial direction to the bark; the tangential direction, running parallel to the bark. The structural picture of wood is different in these three directions and jointly they form a three-dimensional picture of the anatomic build of the wood. Nearly every wood species has its own structural picture and can accordingly be recognized by it through microscopic examination.

Shrink and swell in these three directions are also different, the largest shrink and swell being in the tangential direction. A lesser shrink/swell takes place in radial direction, while shrink/swell is even lesser in the axial direction. Shrink and swell in tangential and radial direction are represented in Figs. 1-3 for normal wood and treated wood. From the Figures, it follows that shrink and swell of wood are clearly anisotropic.

For the skilled person it will be clear that the invention is not limited to the examples described. It will be evident that various modifications are possible within the framework of the invention as set forth in the following claims.

Thus, for instance, the curing step can be executed in a press at a pressure which is in the range of 2-50 bar. Further, the process can be applied to different kinds of wood parts, for instance sawn wood, round wood, fresh and/or old wood, wooden planks, beams, sheets, veneer, poles, thin strips, and/or blocks and the like. Further, the process can be applied to waste wood which in itself hardly offers any useful applications, to obtain useful wood parts from it. The wood parts can comprise solid wood.

The wood parts can have various dimensions, for instance commercial dimensions. Preferably, at least one dimension, for instance the length, thickness, and/or width, of wood parts to be upgraded is greater than about 10 cm, so that the upgraded wood parts are useful substantially directly, for instance for constructional purposes and/or finishing.

In addition to the above-mentioned wood parts, which are relatively large, the process according to the invention can also be applied to smaller wood parts, for instance shredded, sawn and/or otherwise processed wood parts, for instance wood chips, fibers and/or wood shavings. In that case, the comminuted wood parts can, after the hydrothermolysis step, for instance during and/or after the curing step, be combined and/or formed into larger, wood-containing elements and/or composites, for instance through gluing, pressing or the like. Such wood-containing elements can for instance comprise various sheet material, beams, boards, poles, blocks and the like.

Eligible for the process is, for instance, wood of relatively fast-growing tree species. In untreated condition, such wood is generally of low durability, moisture-sensitive, it shrinks and swells strongly, is mostly rather soft and relatively weak. In addition, for instance, the minor-durability sapwood (the portion of the trunk wood of the tree that is active in the growing and living process) of other tree species, besides wood species that are still too moisture-sensitive and too little durable for outside applications, can be upgraded with the process according to the invention.

**Claims**

1. A process for upgrading wood parts, wherein the wood parts in a hydrothermolysis step are brought under the influence of saturated steam at a temperature in the range of 130-220 °C, such that a conversion of hemicellulose and lignin present in the wood parts takes place, wherein the wood parts are subsequently dried in a curing step to a moisture content which is lower than about 3 wt.% at a temperature in the range of 100-220°C, **characterized in that** at least one dimension of each of the wood parts, at least before the hydrothermolysis step, is greater than about 10 cm, wherein the wood parts at the start of the hydrothermolysis step have an initial moisture content which is in the range of 10-25 wt.%.

2. A process according to claim 1, **characterized in that** the initial moisture content of the wood parts is in the range of about 12-18 wet.%, in particular in the range of about 12-16 wt.%.

3. A process according to claim 1 or 2, **characterized in that** the wood parts undergo a drying step for the purpose of obtaining said initial moisture content before the hydrothermolysis step is carried out.

4. A process according to claim 3, **characterized in that** said drying step is carried out at least partly in a drying device.

5. A process according to claim 3 or 4, **characterized in that** said drying step is carried out at least partly in the open air.

6. A process according to any one of the preceding claims, **characterized in that** the hydrothermolysis step is carried out substantially adiabatically, such that the moisture content of the wood parts is substantially constant during that hydrothermolysis step.

**7.** A process according to any one of the preceding claims, **characterized in that** the wood parts, between the hydrothermolysis step and the curing step, are dried in an intermediate drying step, such that the wood parts obtain a moisture content in the range of 2-10 wt.%.

**8.** A process according to claim 7, **characterized in that** the wood parts in the intermediate drying step are adjusted to a moisture content in the range of about 5-8 wet.%.

**9.** A process according to claim 8, **characterized in that** the wood parts, through the intermediate drying step, are adjusted to a moisture content of about 7 wt.%.

**10.** A process according to any one of the preceding claims, **characterized in that** the wood parts, after the curing step, undergo a conditioning step for the purpose of conditioning the wood.

**11.** A process according to claim 10, **characterized in that** the wood, by the conditioning step, is adjusted to a moisture content in the range of about 2-8 wt.%, in particular about 4-6 wt.%.

**12.** A process according to any one of the preceding claims, **characterized in that** the curing step is carried out in a press at a pressure which is in the range of 2-50 bar.

**13.** A process according to any one of the preceding claims, **characterized in that** the curing step is carried out in a low-oxygen environment.

**14.** A process according to any one of the preceding claims, **characterized in that** the initial moisture content of the wood parts is in the range of 15-16 wt.%.

**15.** A process according to any one of the preceding claims, wherein the wood parts in the curing step are dried to a moisture content which is lower than about 2 wt.%.


**Patentansprüche**

**1.** Verfahren zur Aufbereitung von Holzteilen, worin die Holzteile in einem Hydrothermolyseschritt bei einer Temperatur im Bereich von 130 - 220°C unter die Einwirkung von Sattdampf gebracht werden, derart dass eine Umwandlung von Halbzellulose und Lignin, die in den Holzteilen vorhanden sind, stattfindet worin die Holzteile anschließend in einem Nachbehandlungsschritt zu einem Feuchtigkeitsgehalt getrocknet werden, welcher niedriger ist als etwa 3 Gew.% bei einer Temperatur in dem Bereich von 100 - 220°C, **dadurch gekennzeichnet, dass** mindestens eine Abmessung von jedem der Holzteile, mindestens vor dem Hydrothermolyseschritt, größer ist als etwa 10 cm, wobei die Holzteile am Beginn des Hydrothermolyseschritts einen anfänglichen Feuchtigkeitsgehalt haben, welcher in dem Bereich von 0 - 25 Gew.% liegt.

**2.** Verfahren nach Anspruch 1, **dadurch gekennzeichnet, dass** der anfängliche Feuchtigkeitsgehalt der Holzteile in dem Bereich von etwa 12 - 18 Gew.% liegt, insbesondere in dem Bereich von etwa 12 - 16 Gew.%.

**3.** Verfahren nach Anspruch 1 oder 2, **dadurch gekennzeichnet, dass** die Holzteile einem Trocknungsschritt zum Zweck des Erhalts des anfängliche Feuchtigkeitsgehalts ausgesetzt werden bevor der Hydrothermolyseschritt durchgeführt wird.

**4.** Verfahren nach Anspruch 3, **dadurch gekennzeichnet, dass** der Trocknungsschritt mindestens teilweise in einer Trocknungsvorrichtung durchgeführt wird.

**5.** Verfahren nach Anspruch 3 oder 4, **dadurch gekennzeichnet dass** der Trocknungsschritt mindestens teilweise in Freiluft durchgeführt wird.

**6.** Verfahren nach einem der vorangehenden Ansprüche, **dadurch gekennzeichnet, dass** der Hydrothermolyseschritt im Wesentlichen adiabatisch durchgeführt wird, derart dass der Feuchtigkeitsgehalt der Holzteile während des Hydrothermolyseschritts im Wesentlichen konstant ist.

**7.** Verfahren nach einem der vorangehenden Ansprüche, **dadurch gekennzeichnet, dass** die Holzteile, zwischen dem Hydrothermolyseschritt und dem Nachbehandlungsschritt, in einem Zwischentrocknungsschritt getrocknet werden, derart dass die Holzteile einen Feuchtigkeitsgehalt in dem Bereich von 2 - 10 Gew.% erhalten.

8. Verfahren nach Anspruch 7, **dadurch gekennzeichnet, dass** die Holzteile in dem Zwischentrocknungsschritt auf einen Feuchtigkeitsgehalt in dem Bereich von etwa 5 - 8 Gew.% eingestellt werden.

9. Verfahren nach Anspruch 8, **dadurch gekennzeichnet, dass** die Holzteile während des Zwischentrocknungsschritts auf einen Feuchtigkeitsgehalt von etwa 7 Gew.% eingestellt werden.

10. Verfahren nach einem der vorangehenden Ansprüche, **dadurch gekennzeichnet, dass** die Holzteile nach dem Nachbehandlungsschritt einem Konditionierungsschritt zum Zweck der Konditionierung des Holzes ausgesetzt werden.

11. Verfahren nach Anspruch 10, **dadurch gekennzeichnet, dass** das Holz durch den Konditionierungsschritt auf einen Fruchtigkeitsgehalt in dem Bereich von etwa 2 - 8 Gew.% insbesondere etwa 4 - 6 Gew.%, eingestellt wird.

12. Verfahren nach einem der vorangehenden Ansprüche, **dadurch gekennzeichnet, dass** der Nachbehandlungsschritt in einer Presse bei einem Druck durchgeführt wird, welcher in dem Bereich von 2 - 50 bar liegt.

13. Verfahren nach einem der vorangehenden Ansprüche, **dadurchgekennzeichnet**, dass der Nachbehandlungsschritt in einer Umgebung mit niedrigem Sauerstoffgehalt durchgeführt wird.

14. Verfahren nach einem der vorangehenden Ansprüche, **dadurch gekennzeichnet, dass** der anfängliche Feuchtigkeitsgehalt der Holzteile in dem Bereich von 15 - 16 Gew.% liegt.

15. Verfahren nach einem der vorangehenden Anspruch, worin die Holzteile in dem Nachbehandlungsschritt auf einen Feuchtigkeitsgehalt getrocknet werden, welcher niedriger als etwa 2 Gew.% ist.

**Revendications**

1. Procédé pour améliorer des pièces en bois, dans lequel les pièces en bois sont soumises dans une étape d'hydrothermolyse à l'influence de vapeur d'eau saturée à une température dans la plage de 130 à 220 °C, de sorte qu'il se produise une conversion de l'hémicellulose et de la lignine présentes dans les pièces en bois, dans lequel les pièces en bois sont ensuite séchées dans une étape de durcissement jusqu'à une teneur en humidité inférieure à environ 3 % en poids à une température dans la plage de 100 à 220 °C, **caractérisé en ce qu'**au moins une dimension de chacune des pièces en bois, au moins avant l'étape d'hydrothermolyse, est supérieure à environ 10 cm, dans lequel les pièces en bois ont au début de l'étape d'hydrothermolyse une teneur en humidité initiale qui se situe dans la plage de 10 à 25 % en poids.

2. Procédé selon la revendication 1, **caractérisé en ce que** la teneur en humidité initiale des pièces en bois se situe dans la plage d'environ 12 à 18 % en poids, en particulier dans la plage d'environ 12 à 16 % en poids.

3. Procédé selon la revendication 1 ou 2, **caractérisé en ce que** les pièces en bois subissent une étape de séchage dans le but d'obtenir ladite teneur en humidité initiale avant que l'étape d'hydrothermolyse ne soit effectuée.

4. Procédé selon la revendication 3, **caractérisé en ce que** ladite étape de séchage est effectuée au moins en partie dans un dispositif de séchage.

5. Procédé selon la revendication 3 ou 4, **caractérisé en ce que** ladite étape de séchage est effectuée au moins en partie à l'air libre.

6. Procédé selon l'une quelconque des revendications précédentes, **caractérisé en ce que** l'étape d'hydrothermolyse est effectuée de manière sensiblement adiabatique, de sorte que la teneur en humidité des pièces en bois soit sensiblement constante pendant cette étape d'hydrothermolyse.

7. Procédé selon l'une quelconque des revendications précédentes, **caractérisé en ce que** les pièces en bois, entre l'étape d'hydrothermolyse et l'étape de durcissement, sont séchées dans une étape de séchage intermédiaire, de sorte que les pièces en bois assument une teneur en humidité dans la plage de 2 à 10 % en poids.

8. Procédé selon la revendication 7, **caractérisé en ce que** les pièces en bois sont ajustées dans l'étape de séchage intermédiaire jusqu'à une teneur en humidité dans la plage d'environ 5 à 8 % en poids.

9. Procédé selon la revendication 8, **caractérisé en ce que** les pièces en bois sont ajustées dans l'étape de séchage intermédiaire jusqu'à une teneur en humidité d'environ 7 % en poids.

10. Procédé selon l'une quelconque des revendications précédentes, **caractérisé en ce que** les pièces en bois, après l'étape de durcissement, subissent une étape de conditionnement afin de conditionner le bois.

11. Procédé selon la revendication 10, **caractérisé en ce que** le bois est ajusté par l'étape de conditionnement à une teneur en humidité dans la plage d'environ 2 à 8 % en poids, en particulier d'environ 4 à 6 % en poids.

12. Procédé selon l'une quelconque des revendications précédentes, **caractérisé en ce que** l'étape de durcissement est effectuée dans une presse sous une pression dans la plage de 2 à 50 bars.

13. Procédé selon l'une quelconque des revendications précédentes, **caractérisé en ce que** l'étape de durcissement est effectuée dans un environnement à faible teneur en oxygène.

14. Procédé selon l'une quelconque des revendications précédentes, **caractérisé en ce que** la teneur en humidité initiale des pièces en bois se situe dans la plage de 15 à 16 % en poids.

15. Procédé selon l'une quelconque des revendications précédentes, dans lequel les pièces de bois sont séchées dans l'étape de durcissement jusqu'à une teneur en humidité inférieure à environ 2 % en poids.

Fig. 1

EP 1 597 039 B1

Fig. 2

Fig. 3

EP 1 597 039 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0373726 A

**Non-patent literature cited in the description**

- **Rijsdijk J.F. ; Laming P.B.** Physical and related properties of 145 timbers. Kluwer Academic Publishers, 1994